**Europäisches Patentamt**

**European Patent Office**

**Office européen des brevets**

(19)

(11) Numéro de publication: **0 115 032**
**B1**

(12) ## FASCICULE DE BREVET EUROPÉEN

(45) Date de publication du fascicule du brevet:
23.07.86

(51) Int. Cl.⁴: **F 16 K 11/06,** F 16 K 31/60

(21) Numéro de dépôt: **83112850.9**

(22) Date de dépôt: **20.12.83**

(54) **Commande pour mélangeur mécanique.**

(30) Priorité: **28.01.83 CH 491/83**

(43) Date de publication de la demande:
**08.08.84 Bulletin 84/32**

(45) Mention de la délivrance du brevet:
**23.07.86 Bulletin 86/30**

(84) Etats contractants désignés:
**AT CH DE FR GB LI NL**

(56) Documents cité:
**CH-A-643 641**
**US-A-2 977 986**

(73) Titulaire: **KUGLER Fonderie et Robinetterie S.A.,
19, avenue de la Jonction Case postale 240, CH-
1211 Genève 8 (CH)**

(72) Inventeur: **Rodriguez, Jean- Jacques, F-74140
Douvaine (FR)**

(74) Mandataire: **Micheli, Michel- Pierre, MICHELI &
CIE 118, Rue du Rhône Case Postale 47, CH- 1211
Genève 6 (CH)**

EP 0 115 032 B1

LIBER, STOCKHOLM 1986

## Description

La présente invention concerne une commande pour mélangeur mécanique du type comprenant des plaquettes céramiques déplaçables l'une par rapport à l'autre en translation et en rotation. L'un des mouvements relatifs des plaquettes commande la température de sortie de l'eau du mélangeur, tandis que l'autre commande le débit de l'eau. Un tel mélangeur est par exemple tel que celui décrit dans le document CH-A-643641

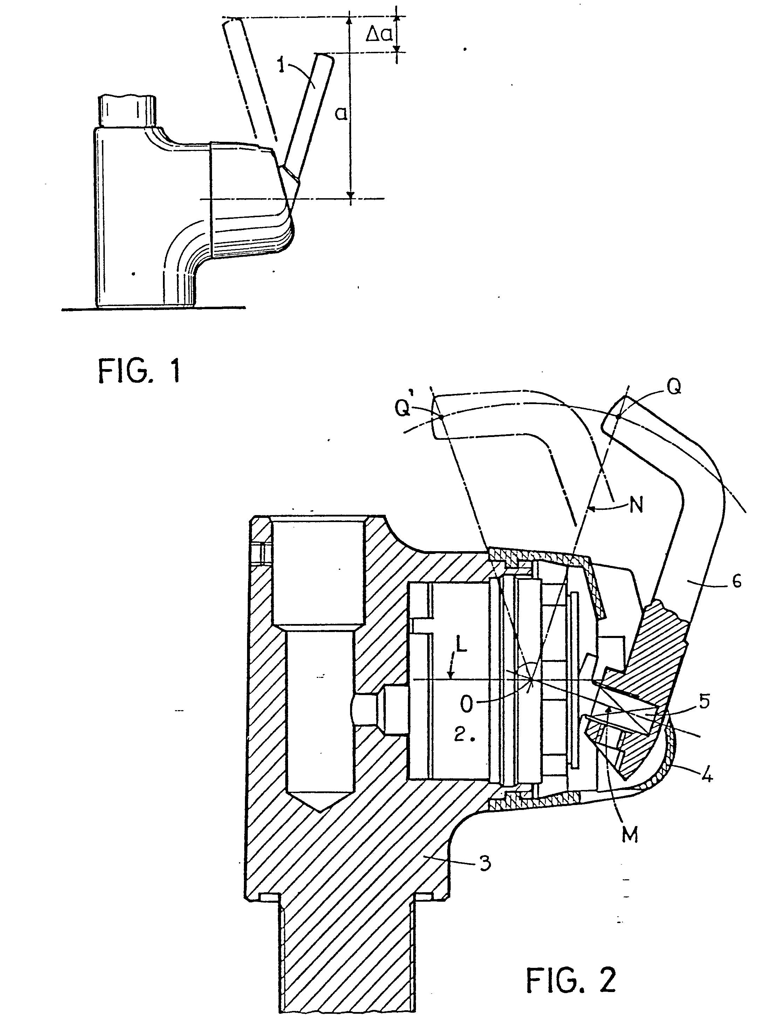

Un mélangeur de ce type est illustré à la figure 1 du dessin annexé. Le levier unique de commande 1 qui entraîne l'une des plaquettes céramiques en translation et en rotation par rapport à l'autre plaquette au moyen d'un axe de commande est illustré en traits pleins dans une position extrême et en traits mixtes dans l'autre position extrême de balancement. Du fait du basculement vertical du levier 1, on remarque que le bras du levier utile pour la commande en rotation diminue progressivement d'une position extrême à l'autre du levier 1 pour laquelle ce bras de levier a est minimum. Dans ces conditions, on remarque immédiatement l'inconvénient majeur de tels mélangeurs qui est de nécessiter une force de plus en plus grande pour la rotation du levier de commande 1 en fonction du degré de basculement de ce levier. Ceci est gênant pour l'usager et devient même critique lorsque la longueur du levier 1 doit être maintenue courte pour des raisons constructives, par exemple dans des mélangeurs dont l'axe du mécanisme doit être horizontal pour permettre d'utiliser des goulots plus hauts et bien dégagés. En effet, dans ces mécanismes, le levier doit être si court, l'encombrement étant limité par exemple par un mur, que la force nécessaire pour sa rotation est encore acceptable dans la position du levier illustré en traits mixtes, mais devient trop grande pour une utilisation agréable lorsque ce levier est dans une autre position de fonctionnement et que le bras de levier a diminué de la valeur Δa par rapport à la position en traits pleins du levier 1.

La présente invention a pour but de remédier à cet inconvénient et à ainsi pour objet une commande pour mélangeur mécanique à levier de commande basculant et rotatif unique qui se distingue par les caractéristiques énumérées à la revendication 1.

Le dessin annexé illustre schématiquement et à titre d'exemple trois formes d'exécution de la commande objet de l'invention.

La figure 2 illustre une première forme d'exécution d'un mélangeur mécanique, certaines parties étant vues en coupe.

La figure 3 illustre le mélangeur de la figure 1 muni d'une seconde forme d'exécution de sa commande.

La figure 4 illustre toujours le même mélangeur, mais équipé d'une troisième forme d'exécution de sa commande.

Se référant à la figure 2, le mélangeur 2, du type à plaquettes céramiques déplaçables en rotation et en translation, ne sera pas décrit ici puisqu'il est existant et décrit par exemple dans la demande de brevet suisse mentionnée dans l'introduction. Ce mélangeur 2 est monté de façon conventionnelle dans le corps d'une batterie 3 comportant les conduits d'amenée d'eau froide et chaude ainsi que le conduit alimentant un goulot (non montré).

Une calotte de protection 4 couvre la partie du mélangeur 2 émergeant hors du corps de la batterie 3.

Le mélangeur mécanique comporte de façon connue un axe de commande 5 pivoté sur l'une des plaquettes céramiques suivant un axe O coupant orthogonalement l'axe longitudinal L du mélangeur. M représente l'axe de l'axe de commande 5, situé dans le même plan que l'axe longitudinal L du mélangeur et passant par l'intersection des axes L et O.

La commande du mélangeur illustré comporte encore un levier de commande 6 solidaire de l'axe de commande 5 permettant d'entraîner celui-ci dans une rotation autour de l'axe M pour provoquer la rotation relative des plaquettes de céramique par exemple et également en rotation autour de l'axe O pour provoquer la translation desdites plaquettes céramiques.

Ce levier de commande 6 présente une forme apte à définir une poignée ou organe de préhension, ici une extrémité coudée, et qu'un point Q de cette poignée coupe une droite N perpendiculaire à l'axe M de l'axe de commande 5. Cette droite N est également perpendiculaire à l'axe O et se situe dans le même plan que les axes L et M.

De cette façon lors d'un basculement du levier 6 de sa position extrême illustrée en traits pleins à son autre position extrême illustrée en traits mixtes, le point Q de ce levier de commande 6 se déplace sur un arc de cercle ayant pour centre l'intersection des axes O et M. Ainsi, le bras de levier du levier de commande 6 reste pratiquement constant par rapport à l'axe longitudinal L quelle que soit la position de ce levier 6. La force nécessaire pour provoquer une rotation de ce levier 6 autour de l'axe L du mélangeur est donc toujours pratiquement constante quelle que soit la position de basculement du levier 6. En fait, comme les positions de basculement extrêmes illustrées du levier sont symétriques par rapport à l'axe L du mélangeur, le bras de levier, et donc la force nécessaire pour la commande, est identique pour les deux positions illustrées. Pour toute position intermédiaire, le bras de levier est légèrement plus grand, le point Q se déplaçant sur un arc de cercle dont le centre passe par l'axe L, et donc la force nécessaire est légèrement plus faible.

Cette construction permet un encombrement minimum du levier de commande 6 pour une force de commande déterminée.

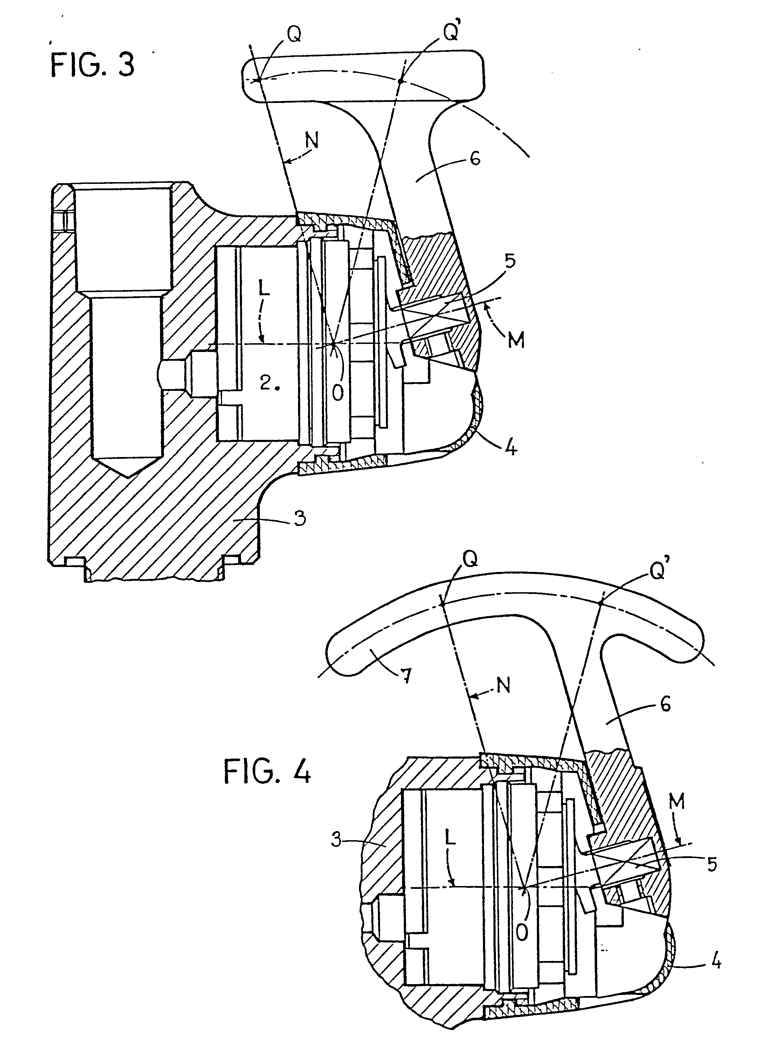

Dans la seconde forme d'exécution illustrée à la figure 3, le levier 6 présente la forme générale d'un T dont la barre forme la poignée et comporte également un point Q situé sur cette poignée et sur la droite N perpendiculaire à l'axe M de l'axe de commande 5. Le point Q de ce levier passe en Q' lors de son basculement et ici également le bras de levier par rapport à l'axe L du mélangeur reste pratiquement le même quelle que soit la position du levier 6.

Dans la troisième forme d'exécution illustrée à la figure 4 le levier de commande 6 comporte une poignée arquée 7 s'étendant sur un arc de cercle de centre O. De plus, dans cette exécution, du fait de la forme de la poignée, il se trouve toujours, quelle que soit la position du levier, un point de ladite poignée situé sur une perpendiculaire à l'axe L du mélangeur passant par le point O. De ce fait, pour toute position du levier 6 le bras de levier, déterminant la force de commande en rotation, est constant.

Dans ces deux dernières formes d'exécution, la poignée du levier 6 facilite sa prise en main.

## REVENDICATIONS

1. Commande pour mélangeur mécanique à plaquettes déplaçables l'une par rapport à l'autre en rotation pour commander la température ou le débit de l'eau et déplaçable en translation l'une par rapport à l'autre pour commander le débit ou la température de l'eau, et comportant un axe de commande (5) pivoté sur l'une des plaquettes et un levier de commande (6) solidaire de cet axe de commande, caractérisé par le fait que la poignée de ce levier de commande (6) comporte au moins un point (Q) situé sur droite (N), perpendiculaire à l'axe (M) de l'axe de commande (5), passant par l'axe de pivotement (O) de cet axe de commande (5).

2. Commande selon la revendication 1, caractérisée par le fait que le levier de commande (6) présente la forme générale d'un L, son extrémité coudée formant ladite poignée.

3. Commande selon la revendication 1, caractérisée par le fait que le levier de commande (6) présente la forme générale d'un T, la poignée étant formée par la barre du T.

4. Commande selon la revendication 1, caractérisée par le fait que la poignée du levier de commande (6) présente la forme d'un arc de cercle dont le centre passe par l'axe de pivotement (0) de l'axe de commande (5).

5. Commande selon la revendication 1 ou la revendication 4, caractérisée par le fait que le levier de commande (6) comporte au moins un point situé sur une droite, perpendiculaire à l'axe (L) du mélangeur, passant par l'axe de pivotement (O) de l'axe de commande (5).

## Patentansprüche

1. Betätiger für ein mechanisches Mischventil mit Scheiben bzw. Plättchen, die in bezug aufeinander rotatorisch bewegbar sind, um die Temperatur oder die Durchsatzmenge des Wassers zu steuern, und die in bezug aufeinander translatorisch bewegbar sind, um die Durchsatzmenge oder die Temperatur des Wassers zu steuern, und mit einer Betätigungsachse (5), die auf einer Scheiben bzw. einem der Plättchen dreh- bzw. schwenkbar angelenkt ist, und einem Betätigungshebel (6), der fest mit diser Betätigungsachse verbunden ist, dadurch gekennzeichnet, daß der Handgriff dieses Betätigungshebels (6) wenigstens einen Punkt (Q) aufweist, der auf einer Geraden (N) liegt, die zur Achse (M) der Betätigungsache (5) senkrecht ist und durch die Dreh-bzw. Schwenkachse (0) dieser Betätigungsachse (5) hindurchgeht.

2. Betätiger nach Anspruch 1, dadurch gekennzeichnet, daß der Betätigungshebel (6) die allgemeine Form eines L aufweist, dessen abgebogenes Ende den genannten Handgriff bildet.

3. Betätiger nach Anspruch 1, dadurch gekennzeichnet, daß der Betätigungshebel (6) die allgemeine Form eines T aufweist, wobei der Handgriff durch den Querbalken des T gebildet ist.

4. Betätiger nach Anspruch 1, dadurch gekennzeichnet, daß der Handgriff des Betätigungshebels (6) die Form eines Kreisbogens aufweist, dessen Mitte durch die Schwenkachse (0) der Betätigungsachse (5) hindurchgeht.

5. Betätiger nach Anspruch 1 oder Anspruch 4, dadurch gekennzeichnet, daß der Betätigungshebel (6) wenigstens einen Punkt aufweist, der auf einer Geraden liegt, die zur Achse (L) des Mischventils senkrecht ist und durch die Schwenkachse (0) der Betätigungsachse (5) hindurchgeht.

## Claims

1. Actuator for a mechanical mixing valve with plates rotatably displaceable the one with respect to the other for controlling the temperature or the flow rate of the water and linearly displaceable the one with respect to the other for controlling the flow rate or temperature of the water, and comprising a control shaft (5) pivoted on one of the plates and a control lever (6) fast with said control shaft, characterized by the fact that the handle of said control lever (6) comprises at least one point (Q) located on a straight line (N), perpendicular to the axis (M) of the control shaft (5), passing through the axis of pivotement (0) of this control shaft (5).

2. Actuator according to claim 1, characterized by the fact that the control lever (6) has the general shape of a L, its bent end forming the said handle.

3. Actuator according to claim 1, characterized by the fact that the control lever (6) has the general shape of a T, the handle being formed by the bar of the T.

4. Actuator according to claim 1, characterized by the fact that the handle of the control lever (6) has the shape of an arc of circle the center of which passes through the axis of pivotement (0) of the control shaft (5).

5. Actuator according to claims 1 or 4, characterized by the fact that the control lever (6) comprises at least one point located on a straight line, perpendicular to the axis (L) of the mixing valve, passing through the axis of pivotement (0) of the control shaft (5).

0 115 032

FIG. 1

FIG. 2

FIG. 3

FIG. 4